Europäisches Patentamt

European Patent Office

Office européen des brevets

(19)

(11) Publication number: **0 240 355 B1**

## EUROPEAN PATENT SPECIFICATION

(12)

(45) Date of publication of patent specification: **25.03.92** (51) Int. Cl.⁵: **G03B 21/00**, F21P 5/02

(21) Application number: **87302906.0**

(22) Date of filing: **02.04.87**

(54) Optical effects projector.

(30) Priority: **04.04.86 GB 8608286**

(43) Date of publication of application:
**07.10.87 Bulletin 87/41**

(45) Publication of the grant of the patent:
**25.03.92 Bulletin 92/13**

(84) Designated Contracting States:
**BE CH DE ES FR IT LI NL**

(56) References cited:
DE-A- 2 028 764     FR-A- 2 497 364
FR-A- 2 549 578     FR-A- 2 553 553
US-A- 3 803 452     US-A- 4 217 047

(73) Proprietor: **OPTIKINETICS LIMITED**
**38 Cromwell Road**
**Luton Bedfordshire LU3 1DN(GB)**

(72) Inventor: **Brunker, Philip**
**108a Alexandra Avenue**
**Luton Bedfordshire LU3 HJ(GB)**

(74) Representative: **Smart, Peter John et al**
**W.H. BECK, GREENER & CO 7 Stone Build-**
**ings Lincoln's Inn**
**London WC2A 3SZ(GB)**

## Description

The present invention relates to an optical effects projector. Optical effects projectors are employed to produce special lighting effects, for instance in discotheques They typically comprise a light source, a light condensing system, a gate for receiving image materials for projection and a projection lens. The projection lens may be provided with special effects attachments such as prisms and deflector mirrors to enhance the effects produced. The materials for projection which are mounted in the gate to interrupt the light path between the light source and the lens often take the form of wheels which are rotated by motors to produce a gradually changing effect.

Another form of optical effects projector comprises a lamp mounted at the focus of an elliptical reflector carrying discrete plane mirrors and mounted to throw images of the lamp through a projection lens to produce a pattern of diverging narrow beams.

Lasers have been used to provide dramatic effects caused by the thin beam of the laser striking through the smoke filled atmosphere of a discotheque but laser equipment is expensive and there may be danger associated with the laser beams being misdirected.

Stroboscopes are also employed in discotheque lighting to provide dramatic flashing effects.

It has now been discovered that new and striking effects can be generated by combining a stroboscopic light source with an optical effects projector providing effects which have the drama of laser generated effects without the excessive cost or the inherent dangers.

DE-A-2028764 relates to an optical pointer for use in pointing out details of a projected image and enhances the visibility of the projected pointer image by using a flashing light source such as a photo-flash lamp. This device is however not adapted to project image materials and is not put forward as an effects projector.

The present invention provides an optical effects projector comprising a light source, and a projection lens, wherein the light source is a stroboscopic light source and means are provided for operating the light source at a flash rate of less than fifteen flashes per second, characterised in that either

(a) the projector further comprises a curved reflector support member having a concave face, means mounting the light source in front of said concave face, and a plurality of discrete reflectors on said concave face of the reflector support member, said projection lens being mounted for projecting a light beam from each said reflector or

(b) the projector further comprises a gate for receiving image carrying materials for projection and means for mounting image material for projection.

Generally, a projector of type (b) will include also a light condensing system.

The concave face of the reflector support member of the projector of type (a) may be an elliptical surface of rotation or a part thereof such as a strip. The reflector support member may be mounted for rotation, preferably about an axis of symmetry thereof and means may be provided for rotating said member in use. The discrete reflectors may be members individually mounted to the support member or may be integrally connected with one another or may be discrete areas on the surface of the support member.

It will generally be desirable that the light source can be adjusted for periodicity of flash. Preferably, the light source can also be adjusted for flash duration and flash interval separately.

However, the flash will operate either at a fixed frequency or at a variable frequency which is not so high that the flashes merge into one another to produce an effect similar to a continuous light source as in a film projector. Preferably, the light source is operable at less than ten flashes per second. Suitably, the light source will be adjustable in the range of several seconds (e.g. 10 seconds) per flash to up to about fifteen flashes per second. A typical frequency of operation of use will be in the range of two to eight flashes per second.

Preferably the stroboscopic light source will be a xenon or other noble gas filled discharge flash lamp.

Preferably, a projector of type (b) will include means for moving image materials mounted for projection. Preferably, the mounting means will be suitable to mount one or more optical effect discs and preferably means will be included for powering rotation of the said disc or discs.

Alternatively means may be provided to mount a supply of film strip, together with means for guiding said film strip through the gate for projection, and take up means for said film strip. Means may be provided for moving the film strip through the gate.

Means may be provided for synchronising the stroboscopic light source with the movement of the image material, e.g. film strip movement. The object will be to project a sequence of short duration, visibly still images in succession rather than to create an illusion of animation of the images as is done in a conventional film projector.

The invention will be further described with reference to the embodiments illustrated in the accompanying drawing by way of illustration. In the drawings:-

Figure I shows in side elevation a typical optical effects projector provided with a light source in accordance with the invention.

Figure 2 shows, in block diagram form, two forms of apparatus for synchronising flash operation with image material movement,

Figure 3 shows, in block diagram form, further apparatus for synchronising flash operation with image material movement, and

Figure 4 shows the optical components of a further form of apparatus according to the invention.

As shown in Figure I, an optical effects projector comprises a housing I having at a front end thereof a projecting lens unit 2 and containing a stroboscopic electronic flash light source 3. The light source technology is in itself known and is of the type conventionally employed in electronic stroboscopes. In the optical path between the light source 3 and the lens 2 there is provided a condensor system II and a gate 4 in the form of a slot running transversely through the housing. A variety of optical effect image sources may be placed in the gate. In the embodiment illustrated, a pair of pillars or mounting plates 5 are provided rising above the gate both in front and behind and mounting a pair of electrical motors 6 having drive shafts 7 upon which image discs 8 are mounted rotatable by the motors 6, to pass through the light path of the projector.

In the embodiment illustrated, a lens 2 is provided with an optical effects attachment in the form of a motor 9 driving a rotatable prism I0 in front of the lens.

Many other kinds of prismatic and mirror effects generators are known for fitting to lenses of projectors of this kind.

A stroboscopic light source 3 may be of a generally conventional kind employed previously in simple stroboscopes, preferably with as short an arc as possible.

Many different kinds of image materials can be fitted in the gate 4 and these include not only relatively large discs of the kind illustrated but also small discs which may be inserted entirely within the area of the gate and rotated about an axis coincident with or offset from the axis of the lens 2.

Whilst the flashing of the stroboscopic light source 3 will generally be at a frequency which is either fixed or adjustable to a preset frequency by the user, means may be provided for linking the flashing of the light source 3 to other lighting equipment or for synchronising the flashing of the light source 3 to sound sources.

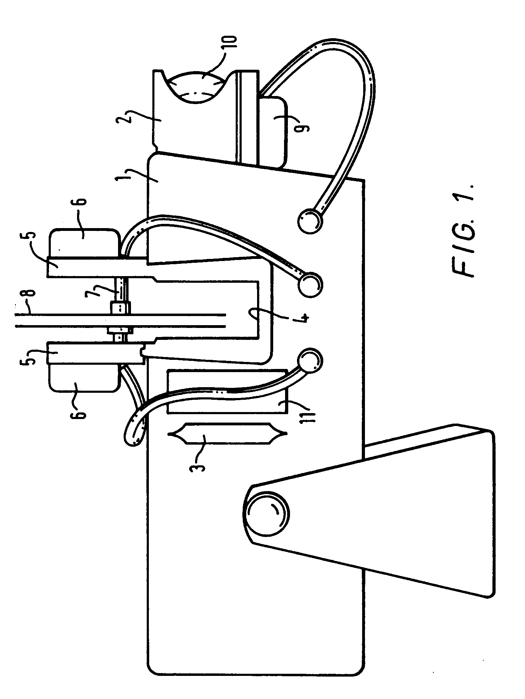

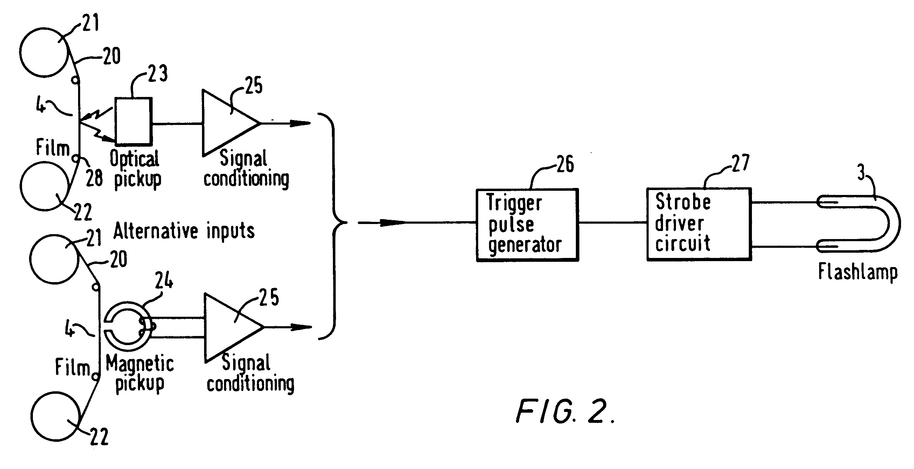

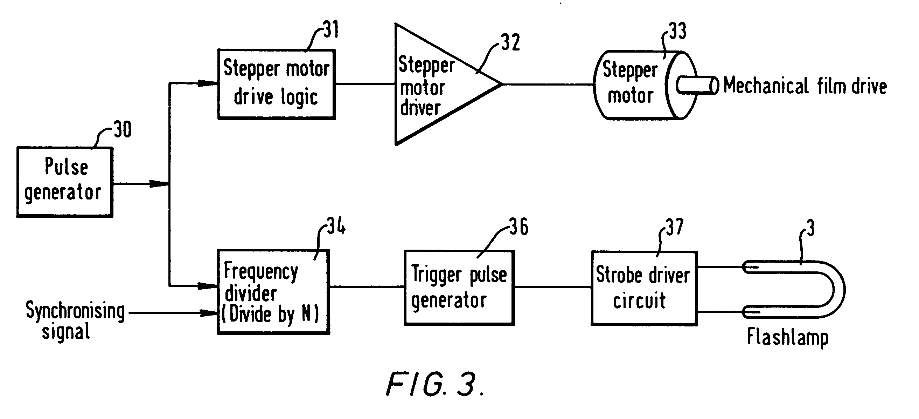

As shown in Figures 2 and 3, the projector may be equipped to project a film strip and flash operation may be synchronised with the film movement.

In Figure 2, synchronisation is obtained by using a sensor to detect the position of moving image material (in this case a film strip) and deriving a signal from said sensor which is used to trigger a flash of the stroboscopic light source.

In more detail, a flim strip 20 is transported between a spool 2I and a take up spool 22 over guide rollers 28 and in the projection gate 4 passes in front of either an optical pick up 23 or a magnetic pick up 24 which senses frame markings on the film strip. The signal passed from the pick up 23 or 24 is processed in suitable signal conditioning circuitry 25 and is passed to a trigger pulse generator 26 which produces a trigger pulse which is supplied to a strobe driver circuit 27 connected to the flash lamp 3 so as to produce a flash of the lamp 3 each time a frame of the film strip is properly positioned in the gate 4.

In Figure 3, synchronisation is obtained by supplying a clock signal both to circuitry driving a motor connected to transport the film strip or other image material and to a circuit providing triggering pulses for operating the stroboscopic light source.

Thus in Figure 3, a clock signal is produced by a pulse generator 30 which is supplied to a stepper motor drive logic circuit 3I which in turn is connected to a stepper motor driver circuit 32 connected to a stepper motor 33 serving to drive the film strip through the gate of the projector. The clock signal is supplied also to a frequency divider circuit 34 together with a synchronising signal which is divided into the clock signal by the frequency divider circuit. The resulting slower pulse signal is passed on to a trigger pulse generator 36 which in turn operates a strobe driver circuit 37 to produce operation of the flash lamp 3. The function of the frequency divider circuit is to provide operation of the flash lamp 3 after each sequence of N pulses from the pulse generator 30 such that N corresponds to the number of pulses necessary to drive the stepper motor to produce a single frame movement of the film strip. The arrangements shown in Figures 2 and 3 can equally well be applied to movement of an optical effects disk rather than a film strip.

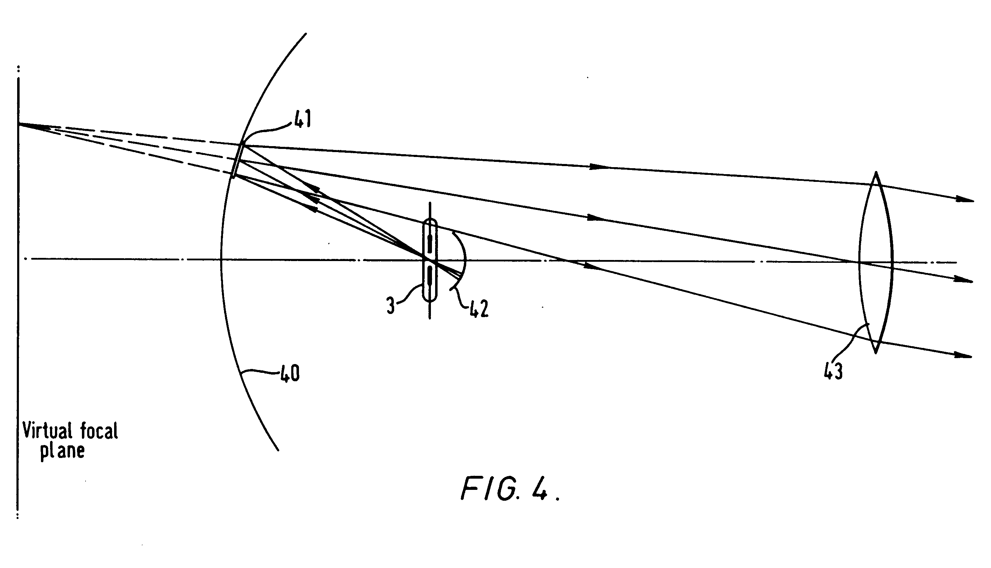

An alternative form of optical effects projector is illustrated in Figure 4. In the projector shown in Figure 4, a flash lamp 3 is positioned in front of the concave surface of an elliptical reflector support member 40 which bears a multitude of discrete plane mirrors 4I of which one is shown. The concave surface of the reflector support member is an elliptical surface of rotation.

On the opposite side of the flash lamp 3 there is positioned a small spherical mirror 42 and the flash lamp is at the focus of the mirror 42. A projection lens 43 is provided to receive light reflected from the discrete plane mirrors and to cast a parallel beam of light from each mirror 4I. The

effect is to provide flashes of very bright narrow beams of light which may be coloured by colouring the mirrors 4l.

The reflector support member may take the form of a strip which may be mounted for rotation about the optical axis of the projector. The effect is then to produce a fan of narrow diverging light beams at each flash of the mirror, the fan gradually rotating as the reflector support member is rotated.

Whilst the invention has been described with reference to the characteristics of the embodiment illustrated, many modifications and variations thereof are possible within the scope of the invention.

## Claims

1. An optical effects projector comprising a light source (3), and a projection lens (2), said light source being a stroboscopic light source provided with means for operating the light source at a flash rate of less than fifteen flashes per second characterised in that said optical effects projector further comprises a curved reflector support member (40) having a concave face, means mounting the light source in front of said concave face, and a plurality of discrete reflectors (41) on said concave face of the reflector support member, said projection lens being mounted for projecting a light beam from each said reflector.

2. A projector as claimed in Claim 1, wherein the concave face of the reflector support member is an elliptical surface of rotation or a part thereof.

3. A projector as claimed in Claim 1 or Claim 2, wherein the reflector support member is mounted for rotation.

4. An optical effects projector comprising a light source (3), and a projection lens (2), said light source being a stroboscopic light source provided with means for operating the light source at a flash rate of less than fifteen flashes per second, characterised in that the optical effects projector includes a gate (4) for receiving image carrying materials (8) for projection and means for mounting the image carrying materials (8) for projection in a predetermined position with respect to the gate.

5. A projector as claimed in Claim 4, further comprising a light condensing system (11).

6. A projector as claimed in Claim 4 or Claim 5, further comprising means for moving image material (8) mounted for projection.

7. A projector as claimed in any one of Claims 4 to 6, where said mounting means is for mounting one or more optical effects discs.

8. A projector as claimed in Claim 7, comprising means (6) for powering rotation of the said disc or discs.

9. A projector as claimed in Claim 6, wherein said mounting means is for mounting a supply (21) of film strip (20), and there are further provided means (28) for guiding said film strip through the gate for projection, and take up means for said film strip (22).

10. A projector as claimed in any one of Claims 6 to 9, further comprising means for synchronising the stroboscopic light source with the movement of the image material.

11. A projector as claimed in any preceding claim, wherein the light source can be adjusted for periodicity of flash.

12. A projector as claimed in Claim 11, wherein the light source is adjustable in the range of several seconds per flash to up to about fifteen flashes per second.

13. A projector as claimed in any preceding claim, wherein the stroboscopic light source is a noble gas filled discharge flash lamp.

## Revendications

1. Projecteur d'effets optiques, comprenant une source lumineuse (3) et une lentille de projection (2), ladite source lumineuse étant une source lumineuse stroboscopique équipée de moyens pour faire fonctionner la source lumineuse à une fréquence d'éclairs de moins de 15 éclairs par seconde, caractérisé en ce que ledit projecteur d'effets optiques comprend en outre un élément courbe de support de réflecteurs (40) présentant une face concave, des moyens de montage de la source lumineuse en avant de ladite face concave, et une multiplicité de réflecteurs séparés (41) sur ladite face concave de l'élément de support de réflecteurs, ladite lentille de projection étant montée de manière à projeter un faisceau lumineux issu de chacun desdits réflecteurs.

2. Projecteur selon la revendication 1, dans lequel la face concave de l'élément de support de réflecteurs est une surface de révolution elliptique ou une partie de celle-ci.

3. Projecteur selon la revendication 1 ou 2, dans lequel l'élément de support de réflecteurs est monté à rotation.

4. Projecteur d'effets optiques, comprenant une source lumineuse (3) et une lentille de projection (2), ladite source lumineuse étant une source lumineuse stroboscopique équipée de moyens pour faire fonctionner la source lumineuse à une fréquence d'éclairs de moins de 15 éclairs par seconde, caractérisé en ce que ledit projecteur d'effets optiques contient une fenêtre d'exposition (4) pour recevoir des matériaux (8) porteurs d'image à projeter, et des moyens pour le montage, dans une position prédéterminée par rapport à la fenêtre d'exposition, des matériaux (8) porteurs d'image à projeter.

5. Projecteur selon la revendication 4, comprenant en outre un système condenseur de lumière (11).

6. Projecteur selon la, revendication 4 ou 5, comprenant en outre des moyens pour déplacer le matériau porteur d'image (8) monté en vue de la projection.

7. Projecteur selon l'une quelconque des revendications 4 à 6, dans lequel lesdits moyens de montage sont prévus pour le montage d'un ou de plusieurs disques à effets optiques.

8. Projecteur selon la revendication 7, comprenant des moyens (6) pour mécaniser la rotation dudit disque ou desdits disques.

9. Projecteur selon la revendication 6, dans lequel lesdits moyens de montage sont prévus pour le montage d'une réserve (21) de bande à images (20), et dans lequel il est en outre prévu des moyens (28) pour guider ladite bande à images à travers la fenêtre d'exposition en vue de la projection, et des moyens d'enroulement (22) pour ladite bande à images.

10. Projecteur selon l'une quelconque des revendications 6 à 9, comprenant en outre des moyens pour synchroniser la source lumineuse stroboscopique avec le mouvement du matériau porteur d'image.

11. Projecteur selon l'une quelconque des revendications 1 à 10, dans lequel la source de lumière peut être réglée en ce qui concerne la périodicité des éclairs.

12. Projecteur selon la revendication 11, dans lequel la source lumineuse est réglable dans la plage de plusieurs secondes par éclair à environ 15 éclairs par seconde.

13. Projecteur selon l'une quelconque des revendications 1 à 12, dans lequel la source lumineuse stroboscopique est une lampe flash à décharge remplie de gaz rare.

**Patentansprüche**

1. Projektor zur Erzeugung von optischen Effekten mit einer Lichtquelle (3) und einer Projektionslinse (2), wobei die Lichtquelle eine stroboskopische Lichtquelle ist, die eine Einrichtung zum Betreiben der Lichtquelle mit einer Blinkrate von weniger als 15 Blitzen pro Sekunde aufweist, dadurch gekennzeichnet, daß der Projektor zur Erzeugung von optischen Effekten weiterhin ein gewölbtes Reflektor-Befestigungselement (40) mit einer konkaven Fläche, eine Einrichtung, die die Lichtquelle vor der konkaven Fläche befestigt, und eine Mehrzahl von diskreten Reflektoren (41) auf der konkaven Fläche des Reflektor-Befestigungselements aufweist, wobei die Projektionslinse derart angebracht ist, daß sie einen Lichtstrahl aus jedem Reflektor projiziert.

2. Projektor nach Anspruch 1, dadurch gekennzeichnet, daß die konkave Fläche des Reflektor-Befestigungselements eine elliptische Rotationsfläche oder Teil davon ist.

3. Projektor nach Anspruch 1 oder 2, dadurch gekennzeichnet, daß das Reflektor-Befestigungselement drehbar befestigt ist.

4. Projektor zur Erzeugung von optischen Effekten mit einer Lichtquelle (3) und einer Projektionslinse (2), wobei die Lichtquelle eine stroboskopische Lichtquelle ist, die eine Einrichtung zum Betreiben der Lichtquelle mit einer Blinkrate von weniger als 15 Blitzen pro Sekunde aufweist, dadurch gekennzeichnet, daß der Projektor zur Erzeugung von optischen Effekten ein Fenster (4) zur Aufnahme von bildtragenden Materialien (8) für die Projektion und Mittel zum Halten der bildtragenden Materialien (8) für die Projektion in einer vorbestimmten Position zum Fenster aufweist.

5. Projektor nach Anspruch 4, dadurch gekennzeichnet, daß er weiterhin ein Lichtkondensorsystem (11) aufweist.

6. Projektor nach Anspruch 4 oder 5, dadurch gekennzeichnet, daß er weitere Einrichtung zum Bewegen des zu projizierenden Bildmaterials (8) aufweist.

7. Projektor nach einem der Ansprüche 4 bis 6, dadurch gekennzeichnet, daß die Kaltemittel zum Halten von einer oder mehr Scheiben für optische Effekte ausgebildet ist.

8. Projektor nach Anspruch 7, dadurch gekennzeichnet, daß er Mittel (6) zur Energieversorgung für die Rotation der Scheibe oder Scheiben aufweist.

9. Projektor nach Anspruch 6, dadurch gekennzeichnet, daß die Haltemittel zum Befestigen eines Vorrats (21) eines Filmstreifens (20) ausgebildet sind, und daß eine Einrichtung (28) zum Führen des Filmstreifens durch das Fenster zum Projizieren und eine Aufnahmeeinrichtung (22) für den Filmstreifen (22) vorgesehen sind.

10. Projektor nach einem der Ansprüche 6 bis 9, dadurch gekennzeichnet, daß eine Einrichtung zur Synchronisation der stroboskopischen Lichtquelle mit der Bewegung des Bildmaterials vorgesehen ist.

11. Projektor nach einem der vorhergehenden Ansprüche, dadurch gekennzeichnet, daß die Lichtquelle bezüglich der Blinkperiodizität eingestellt werden kann.

12. Projektor nach Anspruch 11, dadurch gekennzeichnet, daß die Lichtquelle im Bereich mehrerer Sekunden pro Blitz bis zu zirka 15 Blitzen pro Sekunde einstellbar ist.

13. Projektor nach einem der vorhergehenden Ansprüche, dadurch gekennzeichnet, daß die stroboskopische Lichtquelle eine mit Edelgas gefüllte Entladungsblitzlampe ist.

FIG. 1.

FIG. 2.

EP 0 240 355 B1

FIG. 3.

FIG. 4.

Virtual focal plane